# EUROPEAN PATENT APPLICATION

(11) **EP 0 696 625 A2**
(43) Date of publication of application: **14.02.1996**
(21) Application number: 95305473.1
(22) Date of filing: 04.08.1995
(51) Int. Cl.: C09D 7/12

(54) **A method for reducing yellowness in coating compositions**

(30) Priority: 12.08.1994 US 289467
(71) Applicant: ROHM AND HAAS COMPANY, Philadelphia, Pennsylvania 19106-2399 (US)
(72) Inventor: Konopka, Kenneth Michael, Horsham, Pennsylvania 19044 (US); Lomax, James, Wayne, Pennsylvania 19087 (US)
(74) Representative: Smith, Julian Philip Howard

(57) **Abstract**

A method for reducing yellowness in dried coating compositions is disclosed. The method comprises adding at least two dyes to the composition. The method is useful for reducing yellowness in a variety of aqueous and solvent based coatings, such as, for example, caulks, sealants, paints, roof coatings, floor polishes, wall coatings, especially clear or white pigmented coatings. In addition, the method can be used to reduce yellowness in liquid compositions.

## Description

This invention concerns a method for reducing yellowness in coating compositions. The invention particularly concerns a method for reducing yellowness in coating compositions which are clear or white pigmented.

Formulated coating compositions based on polymeric binders often contain ingredients, such as, for example, defoamers, mildewcides and preservatives, which can produce a yellow colour when the coating compositions are dried. In addition, the polymeric binders in the coating compositions can contain impurities and by-products associated with the polymerization process which can produce a yellow colour when the coating compositions are dried. The presence of a yellow colour in dried coating compositions which are required to be non-yellow, such as, for example, clear or white, is aesthetically undesirable.

A yellow colour can also be present in liquid compositions which are supposed to be clear or non-yellow. The liquid compositions can include coatings, such as, for example, wood coatings and floor polishes, cleaners, personal care products, such as, for example and shampoos. The presence of a yellow colour in such products is aesthetically undesirable. There is a growing marketing trend towards clear products, such as, for example, clear dishwashing lotions, clear sodas, clear shampoos and clear deodorants, since the appearance of such products appeals to customers. A clear floor polish in a clear bottle, for example, is visually appealing to the customer.

Caulks and sealants are used in construction uses and home repair to fill and seal building materials. Caulks prevent the incursion of air and/or moisture in relatively static joints, whereas sealants provide the same protection in joints which may show greater movement. The basic components and formulating procedures for latex caulks and latex sealants are very similar. Latex caulks and latex sealants, hereinafter, will collectively be referred to as thick film construction compounds ("TFCCs") for simplicity. In general, TFCCs are applied such that the dried film has a thickness of greater than about 50 thousandths of an inch.

TFCCs can be clear or pigmented. Clear TFCCs do not contain pigments and can be transparent or translucent. A translucent TFCC has some noticeable haze in the dried bead and does not look truly transparent. This haze is commonly caused by fine particles which are added to the TFCC for thickening or reinforcing purposes. Pigmented TFCCs contain pigments and/or extenders.

Clear TFCCs have been used increasingly over the past fifteen years because they are an alternative to colour matched TFCCs and they allow the colour and texture of the substrate to show through. These TFCCs do not draw the eye's attention away from the appearance of natural substrates, such as, for example, unpainted wood, stone and brick. The selection of formulating materials in clear TFCCs is important for the manufacture of non-yellow clear TFCCs. Not only do latex binders containing copolymers of monomers such as acrylonitrile or vinyl acetate produce a yellow colour in the clear TFCC, but many typical ingredients in the clear TFCC formulation, such as, for example, mildewcides, defoamers, thickeners, and neutralizing agents can also produce a yellow colour in the TFCC when dried.

A yellow colour can be introduced into a TFCC by using component materials in the TFCC which have an inherent yellow colour. In order to obtain white pigmented TFCCs which do not have a yellow appearance when dried, TFCC manufacturers must formulate TFCCs with latex binders and fillers which are not yellow when cured or dried. This precludes the use of latex binders containing copolymers of monomers such as acrylonitrile or vinyl acetate in pigmented TFCCs which are required to be white, with no yellow colouration. Titanium dioxide (TiO₂) pigment is useful for providing a very white appearance in pigmented TFCCs. However, titanium dioxide is a much more expensive pigment compared to other commonly used pigments and extenders, such as, for example, calcium carbonate, clay and mica. Further, large amounts of titanium dioxide may be needed in the pigmented TFCC formulation to obtain the desirable white appearance, such as, for example, 10 to 20 dry pounds of TiO₂ per 100 gallons of TFCC. Therefore, the use of titanium dioxide in white pigmented TFCCs is limited by its high cost compared to other pigments and extenders.

The presence of a yellow colour in either a white pigmented TFCC or a clear TFCC when dried is aesthetically undesirable. Aside from the use of expensive TiO₂ pigment in pigmented TFCCs, there are few methods to reduce or eliminate the yellow colour inherent in a TFCC formulation. One method to brighten a slightly off-colour pigmented TFCC is to add optical brighteners. By "off-colour pigmented TFCC", we mean that the TFCC does not have the desired white appearance for the particular use and is yellow when dried. This method has disadvantages because the light source can significantly affect the efficacy of the optical brightener, and therefore affect the appearance of the pigmented TFCC. That is, the TFCC may look bright and non-yellow in strong sunlight but noticeably yellow in interior lighting or low level sunlight.

The present invention is concerned with the problem of reducing yellowness in coating compositions, in particular, coating compositions which are clear or white pigmented.

In accordance with the present invention there is provided a method for reducing yellow colour in a composition, comprising adding at least two dyes to the composition.

In accordance with the present invention there is also provided a composition having reduced yellowness, the composition being prepared by the above mentioned method.

In a preferred embodiment of this invention, the coating compositions include both clear and white pigmented compositions. The compositions may be latex caulks or latex sealants. A sealant is similar to a caulk except that a sealant composition is designed to withstand movement of the substrate to which the sealant has been applied without causing cracking, loss of adhesion or other performance failures.

Latex binders containing copolymers of monomers such as acrylonitrile or vinyl acetate are commonly used in pigmented TFCCs but are not useful in a clear TFCC because they can impart an undesirable yellow colour to the dried TFCC. This invention allows the production of clear TFCCs having reduced yellowness. The TFCCs of this invention can be formulated with latex binders containing copolymers of monomers such as acrylonitrile or vinyl acetate, or any impurities, by-products, or formulation ingredients which have a tendency to cause a yellow colour. This invention also allows for the production of white pigmented TFCCs which are required to have a non-yellow appearance without the addition of extra TiO₂. A further advantage of this invention is that latex binders containing copolymers of monomers such as acrylonitrile or vinyl acetate can be used in both in clear TFCCs and pigmented TFCCs, thus reducing the TFCC manufacturer's inventory and storage requirements.

This invention allows for the formulation of coatings with latex binders containing copolymers of acrylonitrile which are not yellow when dried. The amount of acrylonitrile in a latex binder which will produce a yellow colour in a dried coating depends on the dried film thickness of the coating, which in turn is determined by the particular application. The thicker the dried coating, the more noticeable the yellow colour. A latex binder containing a copolymer with 2.0% acrylonitrile by weight, for example, might not cause a yellowing problem in a floor polish of less than 1/10 mil (mil = one thousandth of an inch) dried film thickness but could produce a yellow colour in a TFCC of 200 mil dried film thickness. A latex binder containing a copolymer with a relatively high amount of acrylonitrile, such as, for example, 10.0% by weight or greater, could produce a yellow colour even in thin films, such as, for example, a paint with a 1 to 2 mil dried film thickness.

A dye is a chemical compound which, when added to a composition or formulation, changes the colour of the compound or formulation by transmitting light in one or more regions of the visible spectrum. Dyes are commonly used in the preparation of coloured compositions such as plastics and other translucent materials. Suitable dyes for imparting colour to such compositions are well known to those skilled in the art. As used herein, and in the appended claims, "red dye" is a dye which appears red to the observer and generally has a peak transmission of visible light in the range of from 640 to 700 nanometers. As used herein, and in the appended claims, "blue dye" is a dye which appears blue to the observer and generally has a peak transmission of visible light in the range of from 440 to 500 nanometers.

This invention is directed to the addition of at least two dyes to a coating composition which, without the dyes, has an undesirable yellow colour when dried. It is understood that a dye may be prepared or sold as a blend of at least two dyes; such a dye is considered to be "at least two dyes" for the purposes of the present invention. The addition of at least two dyes to the coating composition reduces the yellow colour of the coating composition when dried. In a preferred embodiment of this invention, a first dye and a second dye are added to the coating composition. The naming of the "first" dye and "second" dye is meant for convenience and does not denote order of addition of the dyes. It is preferable that the first dye is a blue dye and the second dye is a red dye. When the first dye and the second dye are added to the coating composition, the resulting colour combination of yellow with the first and second dyes, reduces or eliminates the yellow coloured hue in the coating composition when dried. The use of the first dye and the second dye in a clear TFCC formulation, for example, eliminates the yellow colour in the dried TFCC. The TFCC remains clear but may have a slightly darkened appearance when applied over white substrates. The use of the first dye and the second dye in a white pigmented TFCC formulation eliminates the yellow colour in the white pigmented TFCC when dried and gives the dried TFCC a much whiter appearance relative to the same pigmented TFCC formulation without the dyes.

Since the yellow colour is usually present in the coating composition at very low intensities, only small amounts of the first and second dyes need be added to the coating composition. When the proper levels of dyes are used in the coating composition formulation, colour hue will be eliminated in the dried coating composition and a small amount of composite black will be formed. The addition of only the blue dye to the yellow coating composition creates a green hue, while the addition of only the red dye to the yellow coating composition produces an orange hue. This invention is useful for reducing or eliminating any level of yellow colour in a dried coating composition. The only limitation is the amount of darkening caused by the composite black which can be tolerated for a particular use and property.

It is preferred that the first dye and the second dye are added to the white pigmented or clear TFCC formulation at a total dye concentration of from 1.0 parts per million (ppm), to 15.0 ppm, based on total TFCC non-volatile content. By "total TFCC non-volatile content", we mean the ingredients of a TFCC formulation which, after drying, are left behind and constitute the dry film. The preferred concentration of the dyes is from 0.5 to 10.0 ppm for the first dye, and from 0.5 to 5.0 ppm for the second dye, based on total TFCC non-volatile content. The amounts of the dyes required to be added to the TFCC formulation depends on the degree of yellow colour which is present in the dried TFCC and is desired to be reduced.

It is preferred that the dyes used in this invention are durable. By "durable", we mean that the dyes should not fade or leach out of the coating composition under normal use conditions. It is also preferred that the dyes are compatible with the materials in the coating composition. Dyes, such as, for example, anthraquinones, substituted anthraquinones, and substituted phthalocyanines are useful dyes for this invention. In a preferred embodiment of this invention, useful dyes include AMAPLAST® Red AAP dye (AMAPLAST® is a registered trademark of Colour-Chem. International Corp.) and ACETOSOL® Blue dye (ACETSOL® is a registered trademark of Sandoz Colours and Chemicals).

There are two ways that the first dye and the second dye can be added to the clear or white pigmented TFCC formulation. Both dyes can be added, by stirring or mixing, to one or more of the liquid TFCC components prior to manufacture of the TFCC. The dyes can also be added as formulating components during the manufacture of the TFCC. It is preferable to add solid or liquid dyes to one of the liquid TFCC components, such as, for example, TEXANOL® solvent (TEXANOL® is a registered trademark of Eastman Kodak Co.), at concentrations which allows for accurate measuring and addition of relatively small dye weights, such as for example, 0.2% by weight solids.

The latex binder in the coating compositions of this invention can contain a totally acrylic polymer, acrylic copolymer, isoprene polymer, butadiene polymer, vinyl acetate-ethylene copolymer, vinyl acetate-acrylic copolymer, vinyl acetate-ethylene/acrylic copolymer or any of the polymers or copolymers typically used in the art for coatings. Common monomers in a copolymer of a latex binder for coating compositions include ethyl acrylate, butyl acrylate, vinyl acetate, ethylene, butadiene, ethyl hexyl acrylate, methyl methacrylate, styrene, acrylonitrile, acrylamide, acrylic acid, methacrylic acid, and specialty monomers which can increase adhesion or some other desirable property.

In a preferred embodiment of the present invention, the coating composition formulation also contains at least one optical brightener. Compounds which are optical brighteners are well known to those skilled in the art and include, for example distyrylbiphenyl derivates ("DSBP") and stilbene-derivatives, particularly diaminostilbene derivatives, and naphthotriazoylstilbenes. Suitable DSBP optical brighteners include, for example, distyrylbiphenyl-type whiteners available from Ciba-Geigy sold under the TINOPAL® trade name. Suitable stilbene-derivatives include, for example, the morpholine derivative, the N-methylethanolamine derivate,the diethanolamine derivative and cyanuric chloride derivatives of diaminostilbene. Stilbene drivatives are available, for example, from Ciba-Geigy sold under the TINOPAL® trade name, from Mobay Corp. sold under the Blankophor ® trade name, from Ciba-Geigy sold under the TINOPAL® trade name, and from American Cyanamid Co. sold under the Calcofluor ® trade name. Other optical brighteners, such as 2,2'-(2,5-thiophenediyl)bis[5-tert-butylbenzoxazole] available from Ciba-Geigy as Uvitex® OB can also be used.

When used, the optical brightener is added to a level of from 5 to 1500 ppm, preferably from about 10 to about 1300 ppm, most preferably from about 15 to about 1000 ppm based on the total TFCC non-volatile content. At optical brightener levels below about 5 ppm based on the total TFCC non-volatile content the beneficial effects of the optical brightener may not be observed. At optical brightener levels above about 1500 ppm based on the total TFCC non-volatile content the presence of the optical brightener detracts from the aesthetic appearance of the TFCC. When used, the at least one optical brightener may be added directly or in a suitable solvent to any of the components of the sealer, or added to any combination of the components of the sealer. Preferably, the optical brightener is added as a solution, in a suitable solvent, to the binder or to the formulated TFCC. The effects realized by the use of optical brighteners may change depending upon the lighting conditions, for example, the same pigmented TFCC containing optical brightener may appear less white under incandescent lighting, whereas it may appear bright white under sunlight.

In addition to the binder, the TFCC formulation may also contain water, neutralizing agents, surfactants, defoamers, freeze/thaw stabilizers, dispersants, light stabilizers, thickeners, biocides, wetting agents, plasticizers, cosolvents, pigments, extenders, fillers and optical brighteners. The cosolvents can be used to dissolve the dyes in this invention.

This invention is useful for reducing the yellow colour in a variety of coating compositions, such as, for example, TFCCs, floor polishes, clear and white wall and roof coatings, architectural paints, varnishes, adhesives , elastomeric wall coatings and sealers, which might otherwise be yellow when dried. The coating compositions of this invention can be aqueous or solvent-based. In a preferred embodiment, the coating composition is an aqueous-based TFCC. This invention is also useful for reducing yellow in non-latex sealants, such as, for example, urethane sealants, polysulfide sealants and solvent-based acrylic sealants.

The coating compositions of this invention may be prepared by mixing the formulation components in a Sigma mill or high speed dispersion equipment such as a Cowles disperser.

The coating compositions of this invention may be applied to a wide variety of architectural substrates, such as, for example, wood, metal, glass, ceramics, plaster, plastics, concrete, stucco, and roofing substrates, such as synthetic polymer membranes and foamed insulation; or to previously painted, primed, undercoated, worn,or weathered substrates.

The coating compositions of this invention may be applied by a variety of techniques well known in the art, such as, for example, air-assisted or airless spray, electrostatic spray, brush, rollers, caulking guns and trowels.

The method for reducing yellow can be used in liquid compositions. At least two dyes are added to a liquid composition which, without the dyes, has an undesirable yellow colour. The addition of at least two dyes to the liquid composition, such as, for example, a coating, a cleaner and a personal care product, reduces the yellow colour of the composition. It is preferable that the liquid composition is a coating. The method can be used to reduce yellow colour in a liquid composition which is supposed to be clear but has a yellow colour. After addition of the dyes, the yellow hue is reduced or eliminated. These dyes can be added as formulating components during the manufacture of the liquid composition, or can be added, by stirring or mixing, to one or more of the liquid composition components prior to manufacture.

The following examples are presented to illustrate the invention.

### EXAMPLE 1 - Preparation of a transparent acrylic TFCC

A transparent acrylic TFCC was prepared from the following ingredients using the procedure described below:

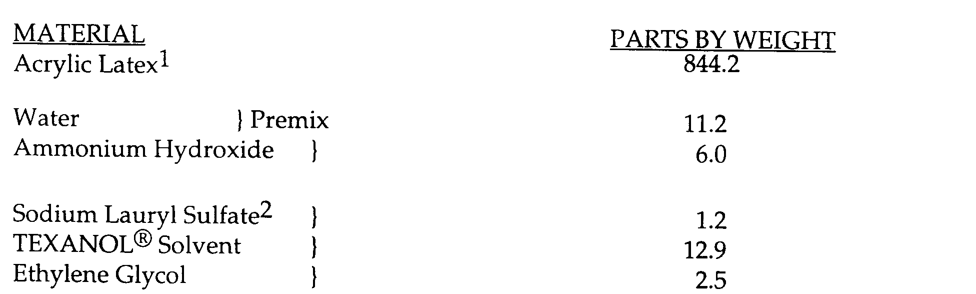

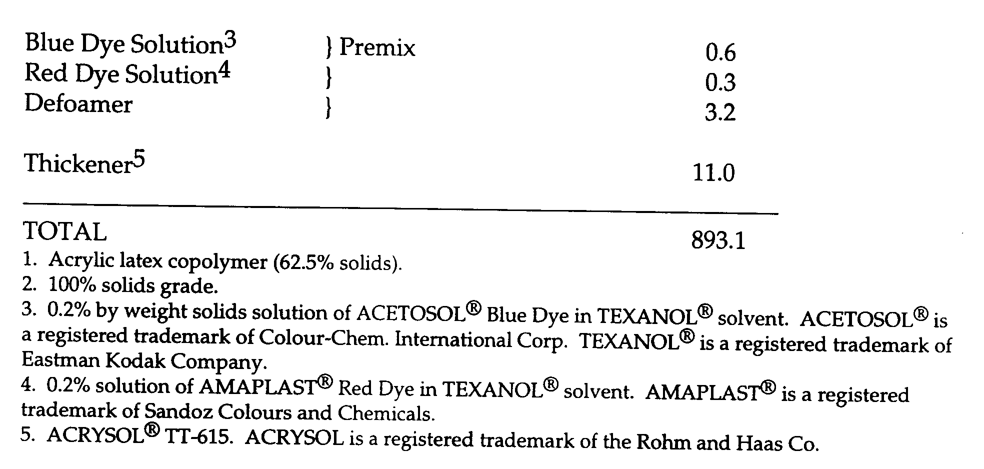

The TFCC was prepared in a Sigma mixer. The acrylic emulsion was charged to the mixer and the mixer was started. The water/ammonium hydroxide pre-mix was slowly added to the emulsion in the mixer. The materials were mixed for about ten minutes. The sodium lauryl sulfate, Texanol® solvent, ethylene glycol, dye solutions, and defoamer pre-mix was then added to the mixer. After about five minutes, the thickener was slowly added. These materials were mixed for 30 minutes and then the TFCC was vacuum de-aired for five minutes at -25 PSI (gauge).

A transparent acrylic TFCC was prepared without the dyes using the same formulation as above, with the exception of the substitution of TEXANOL® solvent for the dye solutions on an equal weight basis.

### EXAMPLE 2 - Preparation of a translucent acrylic TFCC

A translucent acrylic TFCC was prepared from the following ingredients using the procedure described below.

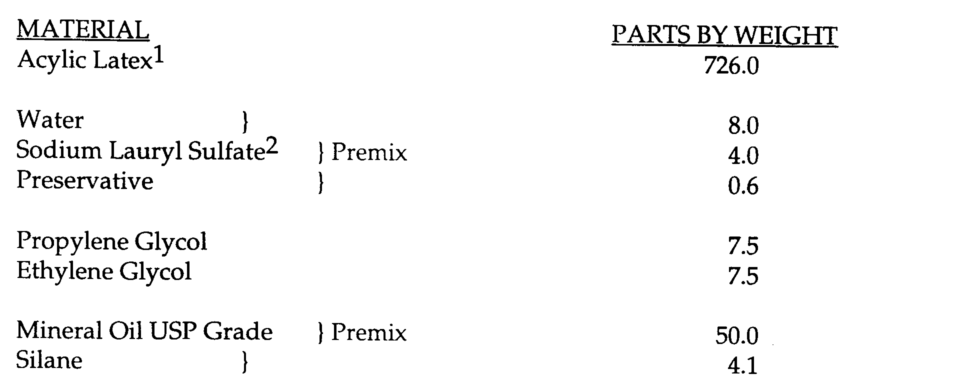

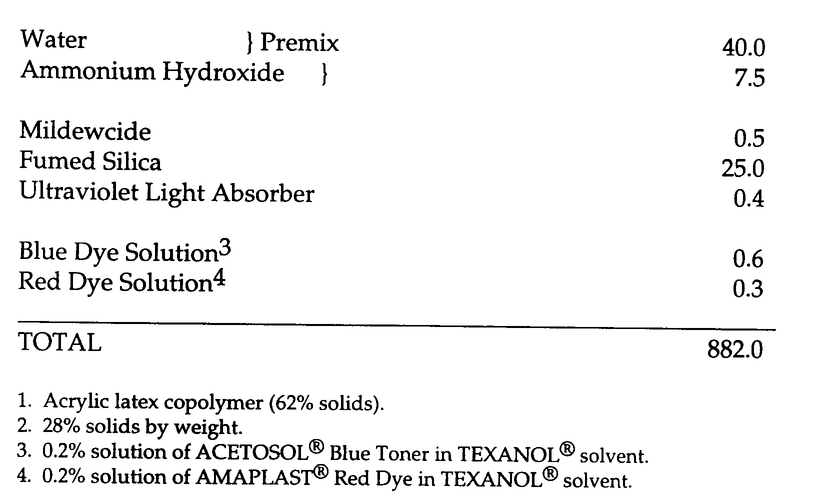

The TFCC was prepared in a Sigma mixer. The acrylic emulsion was charged to the mixer and the mixer was started. The order of addition along with the mixing times between the additions was as follows: water/sodium lauryl sulfate/preservative premix (mixed for five minutes); propylene glycol, ethylene glycol, mineral oil/Silane premix (mixed for five minutes); water/ammonium hydroxide premix (mixed for ten minutes); mildewcide and fumed silica (mixed for ten minutes); the ultraviolet light absorber was added followed by the addition of the dyes. These materials were mixed for forty five minutes and then the TFCC was vacuum de-aired for five minutes at -25 PSI (gauge). A translucent acrylic TFCC was prepared without the dyes using the same formulation as above, with the exception of the substitution of TEXANOL® solvent for the dye solutions on an equal weight basis.

### EXAMPLE 3 - Preparation of a translucent TFCC made with a latex binder containing a copolymer of acrylonitrile.

A translucent TFCC made with a latex binder containing a copolymer of acrylonitrile was prepared from the following ingredients using the procedure described below.

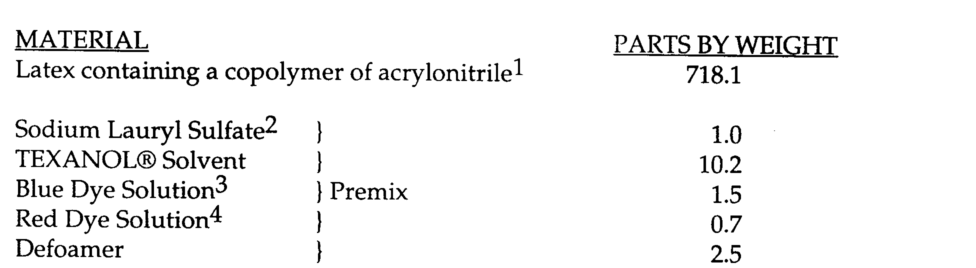

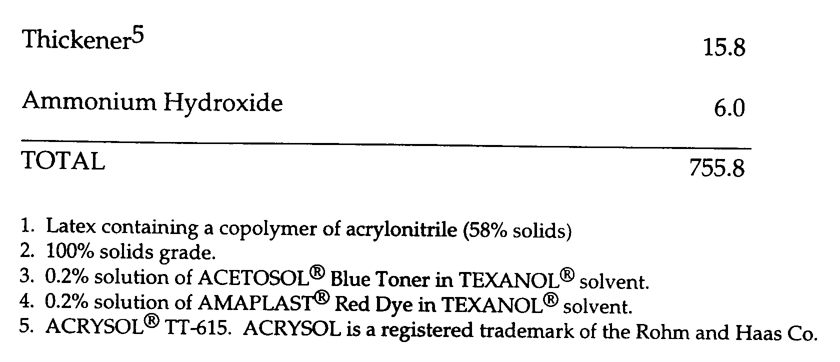

The TFCC was prepared in a Sigma mixer. The latex was charged to the mixer and the mixer was started. The sodium lauryl sulfate/TEXANOL® solvent/Red Dye/Blue Dye/Defoamer premix was slowly added to the emulsion in the mixer. The materials were mixed for about ten minutes. The thickener was then slowly added to the mixer. After about five minutes, the ammonium hydroxide was slowly added. These materials were mixed for one hour and then the TFCC was vacuum de-aired for five minutes at -25 PSI (gauge).

A translucent acrylic TFCC was prepared with a latex binder containing a copolymer of acrylonitrile without the dyes using the same formulation as above, with the exception of the substitution of TEXANOL® solvent for the dye solutions on an equal weight basis.

### EXAMPLE 4 - Preparation of a translucent TFCC made with a latex containing a vinyl acetate/acrylic copolymer.

A translucent TFCC was prepared with a latex binder containing a vinyl acetate/acrylic copolymer from the following ingredients using the procedure described below:

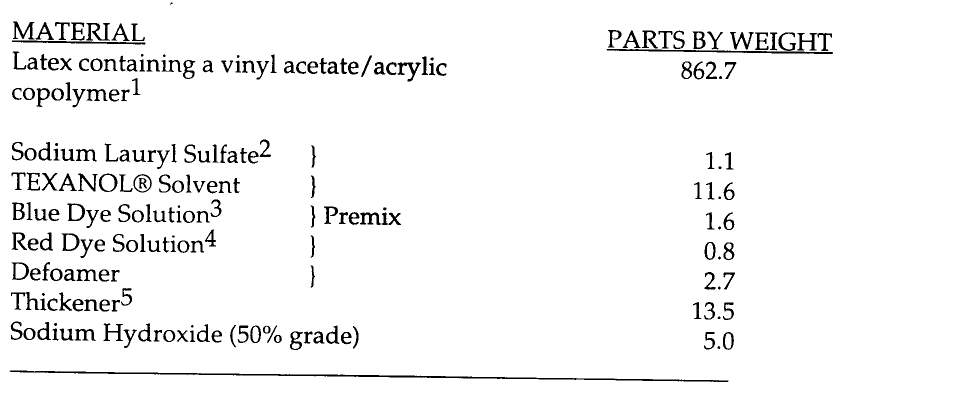

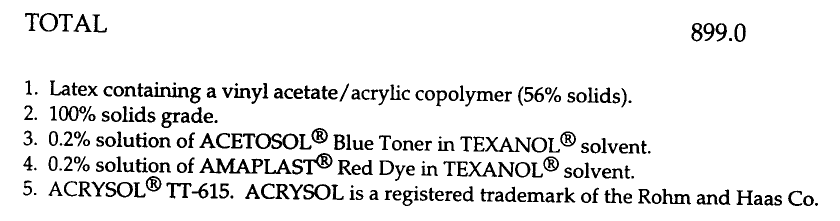

The TFCC was prepared in a Sigma mixer. The emulsion was charged to the mixer and the mixer was started. The sodium lauryl sulfate/TEXANOL® solvent/blue dye/red dye/defoamer premix was slowly added to the emulsion in the mixer. The materials were mixed for about 10 min. After about five minutes, the sodium hydroxide was slowly added. These materials were mixed for one hour and then the TFCC was vacuum de-aired for five minutes at -25 PSI (gauge).

A translucent acrylic TFCC was prepared with a latex binder containing a vinyl acetate/acrylic copolymer without the dyes using the same formulation as above, with the exception of the substitution of TEXANOL® solvent for the dye solutions on an equal weight basis.

### EXAMPLE 5 - Preparation of a white pigmented TFCC made with a latex binder containing an ethylene/vinyl acetate copolymer.

A white pigmented TFCC was made with a latex binder containing an ethylene/vinyl acetate copolymer from the following materials using the procedure described below.

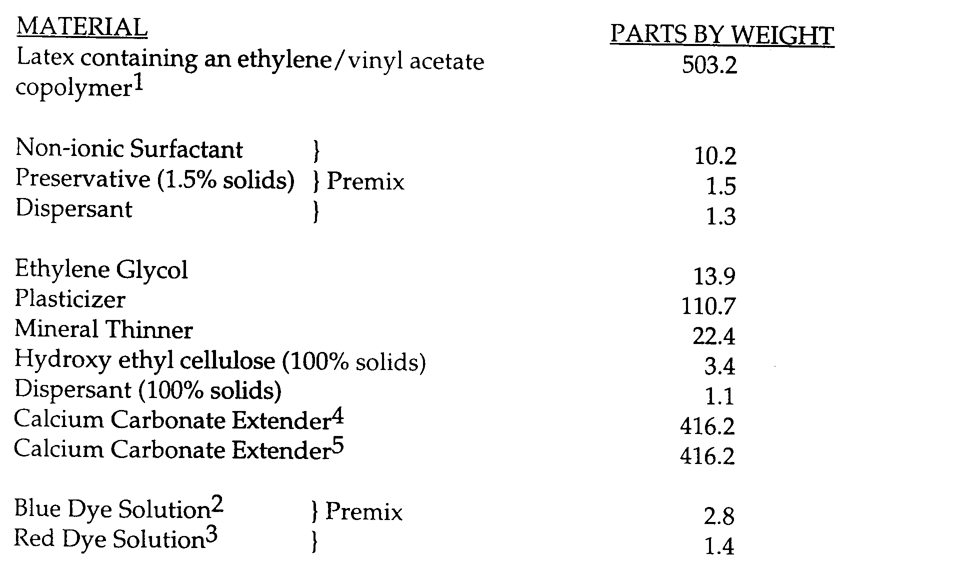

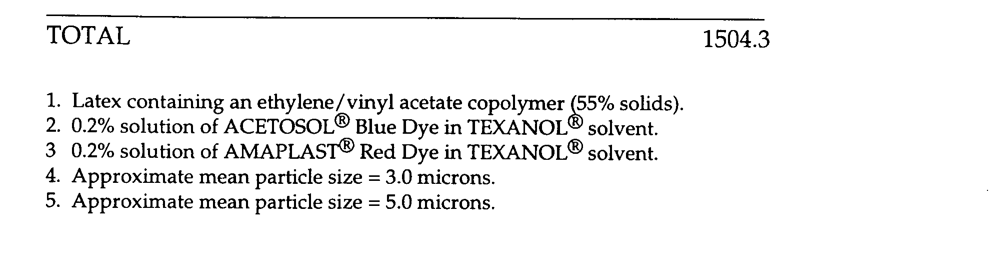

The TFCC was prepared in a Sigma mixer. The emulsion was charged to the mixer and the mixer was started. The surfactant/preservative/dispersant premix was slowly added to the emulsion in the mixer. The materials were mixed for about five minutes. The remaining materials were then added in the order in which they are listed above, and mixed for 1 to 2 minutes between additions. These materials were mixed for 1 1/2 hours and then the TFCC was vacuum de-aired for five minutes at -25 PSI (gauge).

A pigmented TFCC was made with a latex binder containing an ethylene/vinyl acetate copolymer without the dyes using the same formulation as above, with the exception of the substitution of TEXANOL® solvent for the dye solutions on an equal weight basis.

### EXAMPLE 6 - Measurement of the yellow colour in dried TFCCs.

The samples were prepared by depositing TFCC beads approximately 1/4" in diameter on a white sealed paper chart. These beads were dried at 77°F/50% R.H. for one month and were then visually rated for yellow colour from a scale of none indicating no yellow to light indicating a distinctive yellow hue.

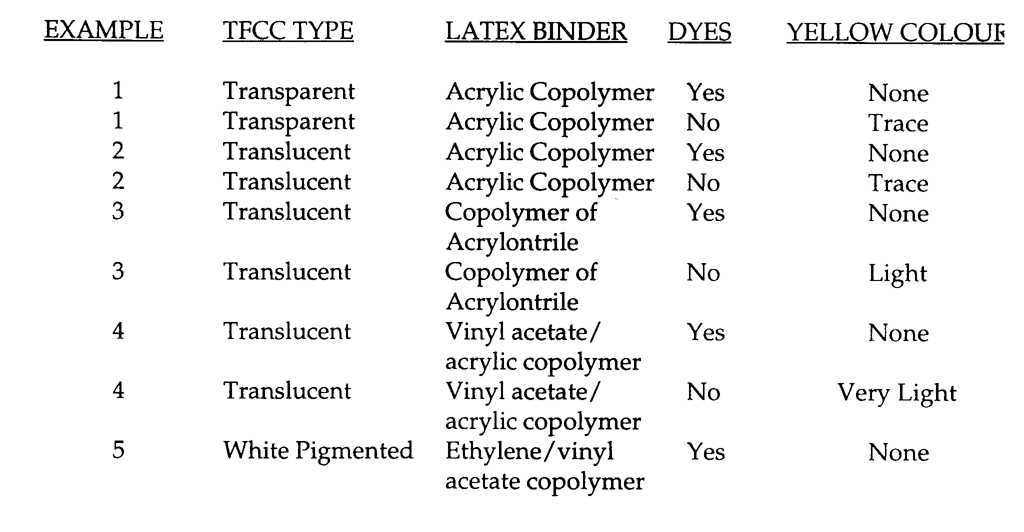

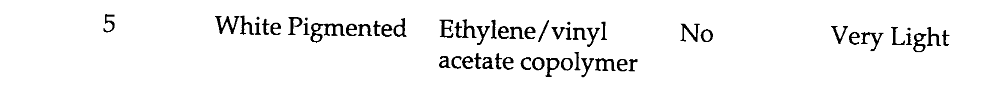

This example shows that the addition of red and blue dyes to transparent, translucent, and pigmented TFCCs resulted in dried TFCCs with no yellow colour. This example also showed that the red and blue dyes are useful for eliminating yellow colour in dried TFCCs made with a latex containing a copolymer of acrylonitrile and a latex containing a copolymer of vinyl acetate.

### EXAMPLE 7 - Dyes in conjunction with Optical Brighteners

The effects of adding optical brighteners to a clear caulk were evaluated as follows:

A sample of commercial aqueous acrylic clear caulk, 55-60 percent by weight total non-volatile content, was added to a tared plastic cup and the weight of caulk was recorded.

As appears in the table below: the blue dye was 0.1 percent by weight solution of Savinyl® Blue RLS in propylene glycol (Savinyl® is a trademark of Sandoz Colours and Chemicals).; the red dye was 0.1 percent by weight solution of Keyplast® Red AA in propylene glycol (Keyplast® is a trademark of Colour-Chem International Corp.); the optical brightener was a 1.0 percent by weight solution in propylene glycol of Tinopal® CBS-X (Tinopal® is a trademark of Ciba-Geigy).

The dyes and optical brightener were added to the caulk to the levels shown in the table below, reported as the total weight, in ppm, of dyes or optical brightener based on the total weight of caulk "Level" and stirred with a spatula for 3-4 minutes.

A one-eighth inch thick film of the caulk was prepared and allowed to dry for 1-2 weeks under ambient conditions. The caulk films were visually rated under outdoor lighting conditions for yellow colour and grey colour from a scale of none indicating no colour to heavy indicating a distinctive coloured hue. The data reported in the table below are the average of four observations.

| Example | Blue Dye Level | Red Dye Level | Optical Brightener Level | Grey Colour | Yellow Colour |
|---|---|---|---|---|---|
| 7A | 0 | 0 | 0 | none | heavy |
| 7B | 1.6 | 0.8 | 0 | slight | none |
| 7C | none | none | 120 | none | slight |
| 7D | 1.6 | 0.8 | 120 | none | none |

This example shows that the addition of optical brightener in conjunction with red and blue dyes to transparent or translucent caulks resulted in dried caulks with no yellow colour and no grey colour.

### EXAMPLE 8 - Dyes in conjunction with Optical Brighteners

The effects of adding optical brighteners to a clear TFCC were evaluated in the same manner as in Example 7 except that the dyes were 0.1 percent by weight solutions in Benzoflex® 131 plasticizer (Benzoflex® is a trademark of Velsicol Chemical Corp.) and the optical brightener was a 1.0 percent by weight solution in Benzoflex® 131 plasticizer of Uvitex® OB (Uvitex® is a trademark of Ciba-Geigy).

A one-eighth inch thick film of the TFCC was prepared and allowed to dry for 1-2 weeks under ambient conditions. The TFCC films were visually rated under outdoor lighting conditions for yellow colour and grey colour from a scale of none indicating no colour to heavy indicating a distinctive coloured hue. The data reported in the table below are the average of four observations.

| Example | Blue Dye Level | Red Dye Level | Optical Brightener Level | Grey Colour | Yellow Colour |
|---|---|---|---|---|---|
| 8A | 0 | 0 | 0 | none | heavy |
| 8B | 1.6 | 0.8 | 0 | slight | trace |
| 8C | none | none | 250 | none | slight |
| 8D | 1.6 | 0.8 | 250 | very slight | none |
| 8E | 0.8 | 0.4 | 250 | trace | none |
| 8F | 0.8 | 0.4 | 125 | none | none |

This example shows that the addition of optical brightener in conjunction with red and blue dyes to transparent or translucent TFCCs resulted in dried TFCCs with no yellow colour and no grey colour.

### EXAMPLE 9 - Preparation of a translucent acrylic TFCC

A translucent acrylic TFCC was prepared from the following ingredients using the procedure described below.

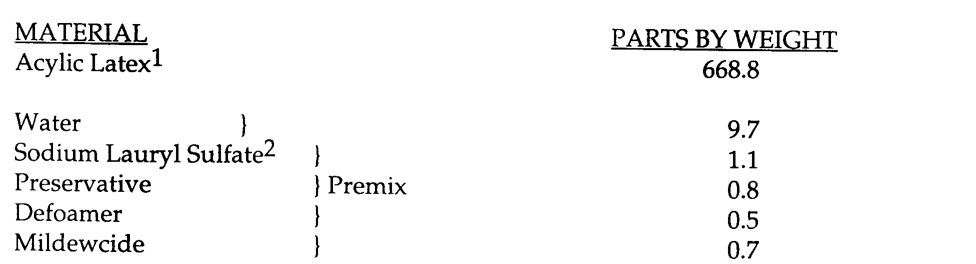

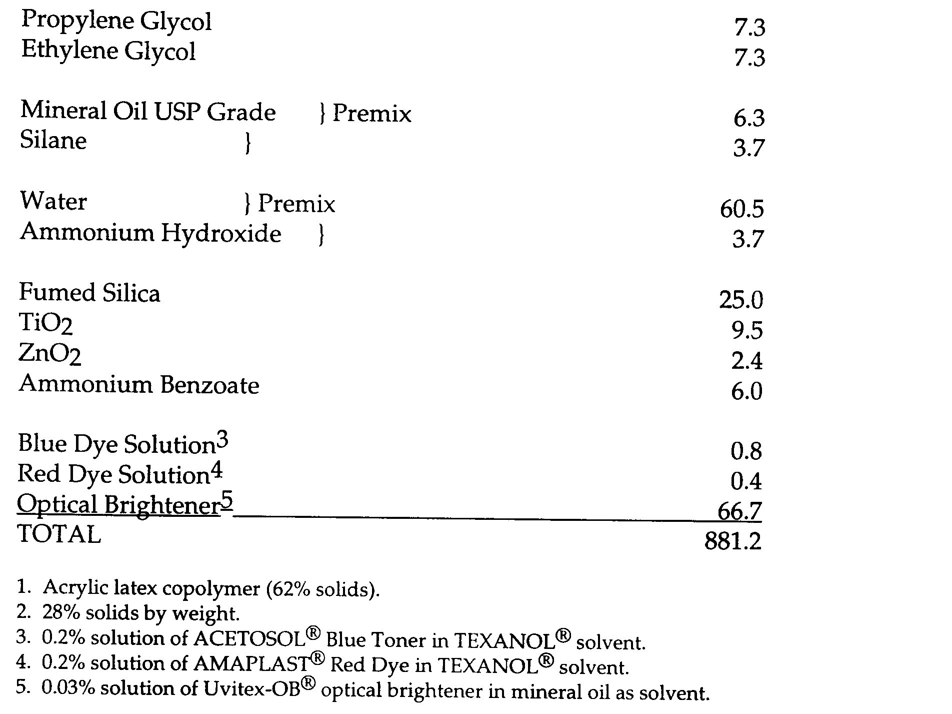

The TFCC was prepared in a Sigma mixer. The acrylic emulsion was charged to the mixer and the mixer was started. The order of addition along with the mixing times between the additions was as follows: water/sodium lauryl sulfate/preservative/defoamer/mildewcide premix (mixed for five minutes); propylene glycol, ethylene glycol, mineral oil/Silane premix (mixed for five minutes); water/ammonium hydroxide premix (mixed for five minutes); fumed silica (mixed for ten minutes); the TiO₂, ZnO₂, ammonium benzoate, and optical brightener was added followed by the addition of the dyes. These materials were mixed for one hour and then the TFCC was vacuum de-aired for five minutes at -25 PSI (gauge).

A translucent acrylic TFCC was prepared without the dyes, and another without the optical brightener, using the same formulation as above. A one-eighth inch thick film of the TFCC was prepared and allowed to dry for 1-2 weeks under ambient conditions. The TFCC films were then rated according to the following test procedures: the whiteness of the TFCCs were evaluated by ASTM E-313; the yellowness of the TFCCs was evaluated by ASTM D-1925. The data reported in the table below are the average of three observations. Higher whiteness numbers indicate improved whiteness. Lower yellowness numbers indicate an improvement in the yellowness of the TFCC (less yellow). The negative numbers indicate a slight bluing of the TFCC.

| Example | Blue Dye Level | Red Dye Level | Optical Brightener Level | Whiteness | Yellowness |
|---|---|---|---|---|---|
| 9A | 0 | 0 | 0 | 66.6 | 4.4 |
| 9B | 1.8 | 0.9 | 0 | 73.5 | 2.5 |
| 9C | none | none | 20.4 | 88.3 | -1.4 |
| 9D | 1.8 | 0.9 | 20.4 | 91.0 | -3.6 |

This example shows that the addition of optical brightener in conjunction with red and blue dyes to pigmented TFCCs resulted in dried TFCCs with no yellow colour and no grey colour.

## Claims

1. A method for reducing yellow colour in a composition, comprising adding at least two dyes to the composition.

2. The method of claim 1, wherein the composition is a coating composition, preferably a caulk, sealant, a paint, a roof coating, a varnish, an adhesive, a floor polish or an elastomeric wall coating; and wherein preferably the composition is white pigmented or clear.

3. The method of any one of the preceding claims, wherein the at least two dyes comprise a blue dye and a red dye.

4. The method of any one of the preceding claims, further comprising adding at least one optical brightener to the composition.

5. The method of any one of the preceding claims, wherein the at least two dyes are added to the coating composition to a total dye concentration of from 1.0 ppm to 15.0 ppm.

6. The method of any one of the preceding claims, wherein the composition is in liquid form.

7. A composition having reduced yellowness, the composition being prepared by the method claimed in any one of the preceding claims.

8. The composition of claim 7, the composition comprising at least one binder selected from the group consisting of acrylonitrile copolymers, vinyl acetate-ethylene copolymers, vinyl acetate-acrylic copolymers and vinyl acetate-ethylene/acrylic copolymers.
